# EUROPÄISCHE PATENTSCHRIFT

(11) **EP 0 732 231 B1**
(45) Veröffentlichungstag und Bekanntmachung des Hinweises auf die Patenterteilung: **16.12.1998**
(21) Anmeldenummer: 96103319.8
(22) Anmeldetag: 04.03.1996
(51) Int. Cl.: B60H 1/00, F24F 13/14

(54) **Heizungs- und Belüftungs- bzw. Klimaanlage für Kraftfahrzeuge**
Heating, aerationor air conditioning device for vehicle
Dispositif de chauffage, d'aération ou de climatisation pour véhicule automobile

(30) Priorität: 15.03.1995 DE 19509318
(43) Veröffentlichungstag der Anmeldung: 18.09.1996
(73) Patentinhaber: ADAM OPEL AG, 65423 Rüsselsheim (DE)
(72) Erfinder: Hambrech, Thomas, Dipl.-Ing., 55129 Mainz (DE)
(74) Vertreter: Bergerin, Ralf, Dipl.-Ing.

(56) Entgegenhaltungen:
- DE-A- 3 226 438
- GB-A- 1 293 793
- GB-A- 2 132 336
- US-A- 4 614 152

## Beschreibung

Die Erfindung bezieht sich auf eine Heizungs- und Belüftungs- bzw. Klimaanlage von Kraftfahrzeugen mit den im Oberbegriff des Patentanspruchs 1 angegebenen Merkmalen.

Gebläse solcher Anlagen saugen Luft über Luftansaugkanäle an und fördern diese Luft zu verschiedenen Auslässen im Fahrzeuginnenraum. Es ist üblich, daß Luft entweder von außerhalb des Fahrzeugs als Frischluft angesaugt wird oder aus dem Fahrzeuginnenraum selbst kommt, also ein Luftkreislauf (Umluftbetrieb) realisiert ist. Auch Mischstellungen eines entsprechenden Einstellorgans - der Frischluft-Umluft-Klappe - sind möglich, so daß ein Teil der Luft von außen und ein anderer Teil aus dem Fahrzeuginnenraum angesaugt wird.

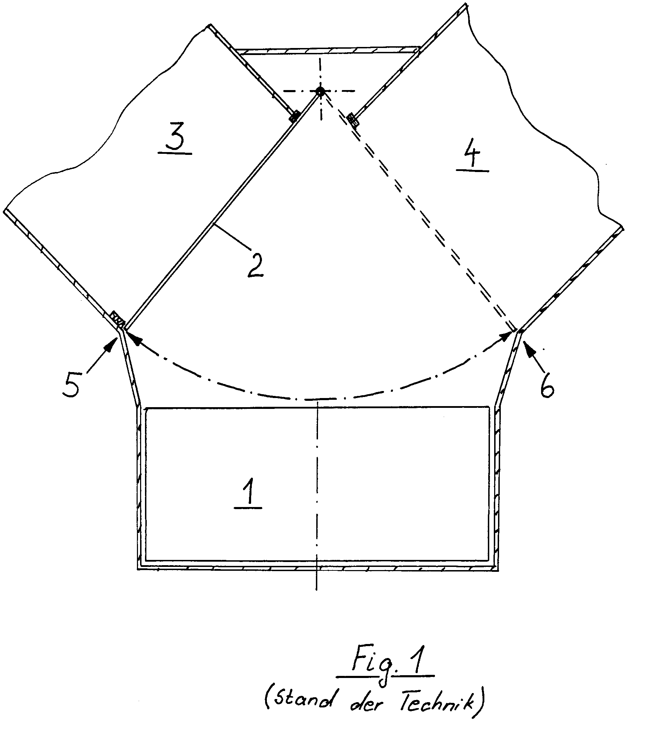

Zwei Luftansaugkanäle enden im allgemeinen im unmittelbaren Bereich des Gebläses in einem Gehäuse, wobei endseitige Öffnungen der Kanäle im Winkel zueinander etwa V-förmig angeordnet sind. Bekannt ist die gebläseferne Lagerung einer Frischluft-Umluft-Klappe, so daß diese um eine Achse verschwenkbar ist. Über eine Verstellvorrichtung ist die Klappe entweder in eine den Umluftansaugkanal oder den Frischluftansaugkanal verschließende Stellung oder in Zwischenstellungen überführbar. Zur Erreichung großer ansaugbarer Volumenströme bei möglichst geringer Strömungsgeschwindigkeit ist es von Vorteil, wenn beide Luftkanäle und ihre Auslaßöffnungen eine möglichst große Querschnittsfläche aufweisen. Die Frischluft-Umluft-Klappe muß eine entsprechend große Klappenfläche aufweisen. Wird die Klappe um die genannte Achse verschwenkt, beschreibt ein freies Ende der Klappe eine Kreisbahn, die außerhalb des Gebläsebereiches liegen muß. Damit müssen die Luftansaugkanäle (zumindest Kanalwandungen im seitlichen Randbereich des Gebläses) in einem gewissen Abstand zum Gebläse enden. Die Skizze in Figur 1 verdeutlicht diesen Stand der Technik, wobei mit dem Bezugszeichen 1 ein Gebläserotor, mit 2 eine Frischluft-Umluft-Klappe, mit 3 ein Frischluftkanal und mit 4 ein Umluftkanal versehen ist. Es wird deutlich, daß zwangsweise Strömungsabrißkanten 5, 6 entstehen, die die Strömungsverhältnisse im Gehäuse ungünstig beeinflussen. Es treten Leistungsverluste durch Verwirbelungen und unerwünschte Geräusche auf. Es ist möglich, daß sich die Klappe ungewollt selbsttätig öffnet, wenn vor und hinter der Klappe Druckverhältnisse bestehen, die dies fördern.

In einer anderen bekannten Lösung (DE-OS 32 26 438) wird ein walzenförmiger Schieber als Frischluft-Umluft-Klappe verwendet. Auch hier entstehen jedoch die genannten Probleme durch vorhandene Abrißkanten.

Es ist Aufgabe der Erfindung, eine einfach aufgebaute und damit kostengünstige Heizungs- und Belüftungs- bzw. Klimaanlage für Kraftfahrzeuge zu schaffen, wobei eine Anordnung einer Frischluft-Umluft-Klappe eine strömungsgünstige Gestaltung der Auslässe von Luftansaugkanälen zulassen soll, so daß nicht von der Klappe verschlossene Ansaugkanäle die Luft geräuscharm und verlustoptimiert dem Gebläse zuleiten. Die Möglichkeiten der selbsttätigen Öffnungsbewegung der Klappe sollen weitestgehend ausgeschlossen werden.

Zur Lösung dieser Aufgabe zeichnet sich die erfindungsgemäße Heizungs- und Belüftungs- bzw. Klimaanlage durch die Gesamtheit der im Patentanspruch 1 angegebenen Merkmale aus. Weitere Merkmale der Erfindung ergeben sich aus den Patentansprüchen 2 bis 8.

Eine Frischluft-Umluft-Klappe der Heizungs- und Belüftungs- bzw. Klimaanlage nach der Erfindung ist einteilig ausgeführt und mittels zumindest eines Schub-Dreh-Gelenkes in Form einer Kulissenführung im Gehäuse der Anlage gelagert. Die Klappe vollzieht bei ihrer Bewegung zwischen der den Umluftkanal oder den Frischluftkanal verschließenden Stellung eine kombinierte translatorische und rotatorische Bewegung und kann damit ständig sehr nah am Gebläse entlang bewegt werden. Beide Luftansaugkanäle können somit im unmittelbaren Gebläsebereich enden, und ihre Auslaßöffnungen sind im Sinne eines optimalen Strömungsübergangs zum Gebläse zu gestalten.

Da bevorzugt Radialgebläse (mit einer Luftansaugrichtung etwa in Richtung einer Gebläseachse) zur Anwendung kommen, hat die den Luftansaugkanälen zugewandte Gebläseseite die Form eines Kreises. Das dem Gebläse zugewandte Ende der Frischluft-Umluft-Klappe sollte vorzugsweise nahe dieser Kreisebene eine annähernd lineare Bewegung ausführen. Dies kann erreicht werden, indem dieses Ende der Klappe innerhalb einer gebläsenahen linearen Kulissenbahn geführt wird und das gebläseferne Ende der Klappe "schwimmend" am Gehäuse gelagert, also in einer weiteren Kulissenbahn geführt wird. Diese letztgenannte Kulissenbahn kann Teil der Frischluft-Umluft-Klappe sein oder gehäusefest angeordnet werden, wobei die erstgenannte Variante kinematische Vorteile bietet, was weiter unten am Beispiel erläutert wird.

In anderer Ausführung der Erfindung wird die Frischluft-Umluft-Klappe gebläsefern "schwimmend" gelagert und in einer zweiten Kulissenbahn oder nur an einem als Kurbel ausgeführten Verstellelement zusätzlich geführt. So sind sehr detailliert vorwählbare Bewegungen der Klappe zu erzeugen.

Als Verstellelemente von Verstellvorrichtungen für die Klappe kommen entweder um eine Achse verschwenkbare Elemente (Kurbeln) oder herkömmliche Bowdenzüge zur Ausübung von Kräften auf die Klappe in Betracht.

Von besonderem Vorteil ist, daß die Bewegung der Klappe derart steuerbar ist, daß sie sich, kurz bevor ein Luftansaugkanal verschlossen wird, in Richtung der Klappenebene bewegt. Damit kann ein auf die Klappenfläche wirkender Unter- oder Überdruck nicht zum selbsttätigen Öffnen der Klappe führen.

Einzelheiten der Erfindung werden anhand von Ausführungsbeispielen beschrieben. Neben der Figur 1, die die bereits genannte Lösung zum Stand der Technik zeigt, beinhaltet
- Figur 2A bis E:: eine Heizungs- und Belüftungs- bzw. Klimaanlage nach der Erfindung mit in zwei gebläsefern angeordneten Kulissenbahnen geführter Frischluft-Umluft-Klappe, bei schematischer Darstellung mehrerer Klappenpositionen;
- Figur 3A bis E:: eine Heizungs- und Belüftungs- bzw. Klimaanlage anderer Ausführung mit einer Frischluft-Umluft-Klappe, die in einer Kulissenbahn und an einer Kurbel geführt ist, bei schematischer Darstellung mehrerer Klappenpositionen;
- Figur 4A bis E:: eine Heizungs- und Belüftungs- bzw. Klimaanlage anderer Ausführung mit in einer gebläsenahen und einer gebläsefernen Kulissenbahn geführter Frischluft-Umluft-Klappe, bei schematischer Darstellung mehrerer Klappenpositionen.

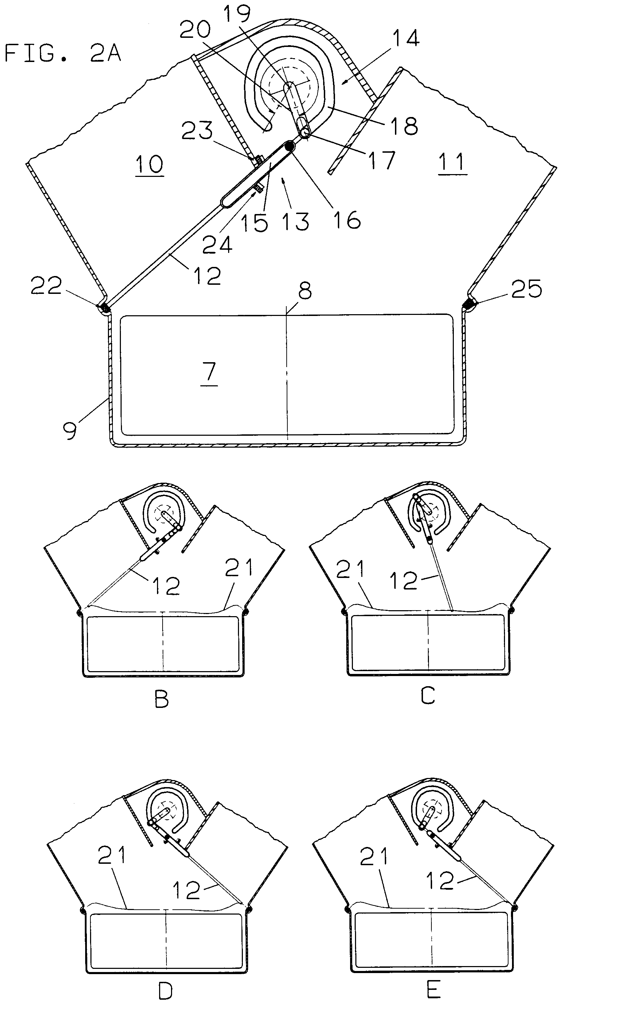

In den Figuren 2, 3 und 4 ist gezeigt, daß ein schematisch angedeutetes Lüfterrad eines Gebläses 7 um eine Achse 8 drehbar in einem Gehäuse 9 gelagert ist. Des weiteren sind ein Endabschnitt eines Frischluftkanales 10 und eines Umluftkanales 11 wie auch das Gehäuse 9 geschnitten dargestellt. Über den Frischluftkanal 10 ist Außenluft vom Gebläse 7 ansaugbar, wohingegen durch den Umluftkanal 11 Luft aus dem Fahrzeuginnenraum angesaugt werden kann.

In Figur 2 ist eine Frischluft-Umluft-Klappe 12 gezeigt, die bei der Bewegung zwischen der den Frischluftkanal 10 verschließenden Stellung (Figur 1A) und der den Umluftkanal 11 verschließenden Stellung (Figur 1E) in zwei gebläsefern vorgesehenen Kulissenführungen 13, 14 geführt wird. Die Kulissenführung 13 besteht aus einer etwa in der Ebene der Klappe 12 gelegenen, linearen Kulissenbahn 15, die Bestandteil der Klappe 12 selbst ist. Jeweils ein Zapfen 16 des Gehäuses 9 ragt beidseitig der Klappe 12 in die Kulissenbahn 15 hinein, so daß die Klappe 12 an den Zapfen 16 verschwenk- und verschiebbar "schwimmend" gelagert ist. Beidseitig am gebläsefernen Teil der Klappe 12 sind Zapfen 17 vorgesehen, die in annähernd kreisringsektor-förmigen Kulissenbahnen 18 des Gehäuses 9 geführt werden, wobei die Kulissenbahnen 18 zur Kulissenführung 14 gehören. Die Kulissenbahnen 18 sind derart gestaltet, daß das freie Ende der Klappe 12 die gewünschte annähernd lineare Bewegung entlang der Gebläseradkontur vollführt. Eine Verstellvorrichtung (Verstellmotor, Bowdenzug ...) mit einem kurbelförmigen um eine Achse 19 verschwenkbaren Verstellelement 20 bewegt die Zapfen 17 der Klappe 12 bei Aktivierung durch die Kulissenbahn 18. Das freie Ende der Klappe 12 bewegt sich entlang der in den Figuren 2B bis E gezeigten Linie 21. Es wird deutlich, daß die Klappe 12 sich kurz vor dem Verschließen der einzelnen Luftansaugkanäle 10, 11 etwa linear in Richtung der Klappenebene bewegt. Dies wird dadurch erreicht, daß die Kulissenbahn 18 in ihren Endabschnitten in einer Flucht mit den Kanalwandungen und den Zapfen 16 verläuft. Eine Bewegung der Klappe 12 durch unterschiedliche Druckverhältnisse vor und hinter der Klappe 12 ist ausgeschlossen. Dichtungen 22 bis 25, die an der Klappe 12 bzw. am Gehäuse 9 angeordnet sind, werden bei der Schließbewegung der Klappe 12 komprimiert, ohne daß wesentliche Reibkräfte auftreten, wie dies der Fall ist, wenn Klappen durch eine reine Schwenkbewegung in die Schließstellung überführt werden.

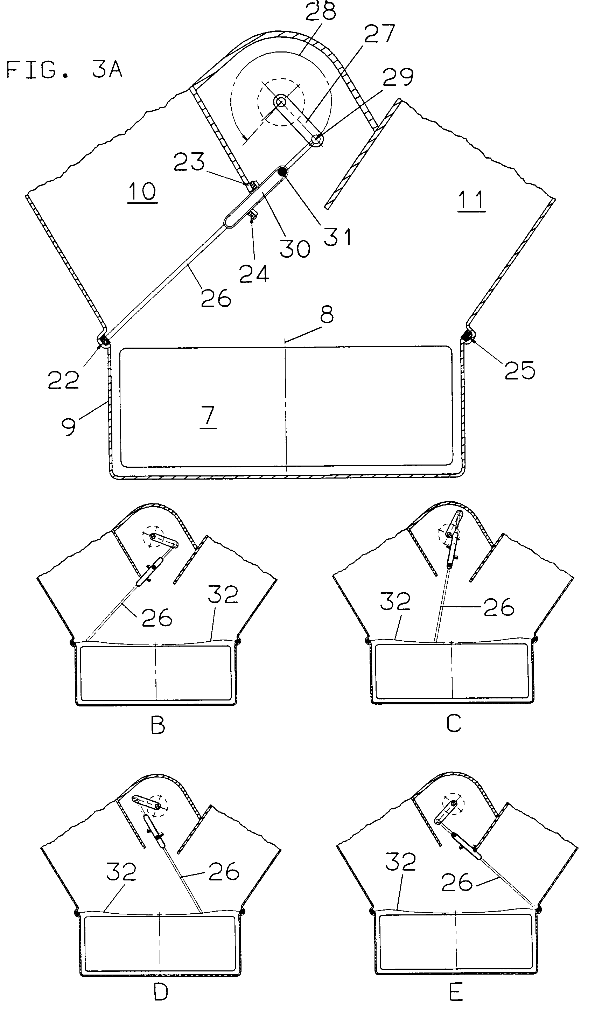

Die Anordnung einer Frischluft-Umluft-Klappe 26 nach Figur 3 ist mit der nach Figur 2 vergleichbar. Hier wurde jedoch auf die Anordnung einer zweiten Kulissenführung 14 verzichtet. Die Klappe 26 wird an einem als Kurbel ausgeführten Verstellelement 27 auf einer Kreisbahn 28 geführt. Sie ist um eine Achse 29 verschwenkbar an dem Verstellelement 27 gelagert. Beim Verschwenken des Verstellelementes 27 wird die Klappe 26, die eine Kulissenbahn 30 beinhaltet, wiederum an einem gehäusefesten Zapfen 31 geführt. Das freie Ende der Klappe 26 bewegt sich entlang der Linie 32, die in den Figuren 3B bis E gezeigt ist.

In beiden Schließstellungen der Klappe 26 (Figur 3A und 3E) tangiert eine zur Klappenebene parallele Gerade die Kreisbahn 28. Damit ist gewährleistet, daß die Bewegung der Klappe 26 kurz vor dem Schließen eines der Kanäle 10, 11 etwa in Richtung der Klappenebene erfolgt und sich die Klappe 26 dann nicht selbsttätig bewegen kann. Diese Ausführung der Erfindung ist besonders einfach und mit geringem Aufwand verbunden. Wiederholungen zu Möglichkeiten der Abdichtung zwischen der Klappe 26 und den Kanälen 10, 11 erübrigen sich.

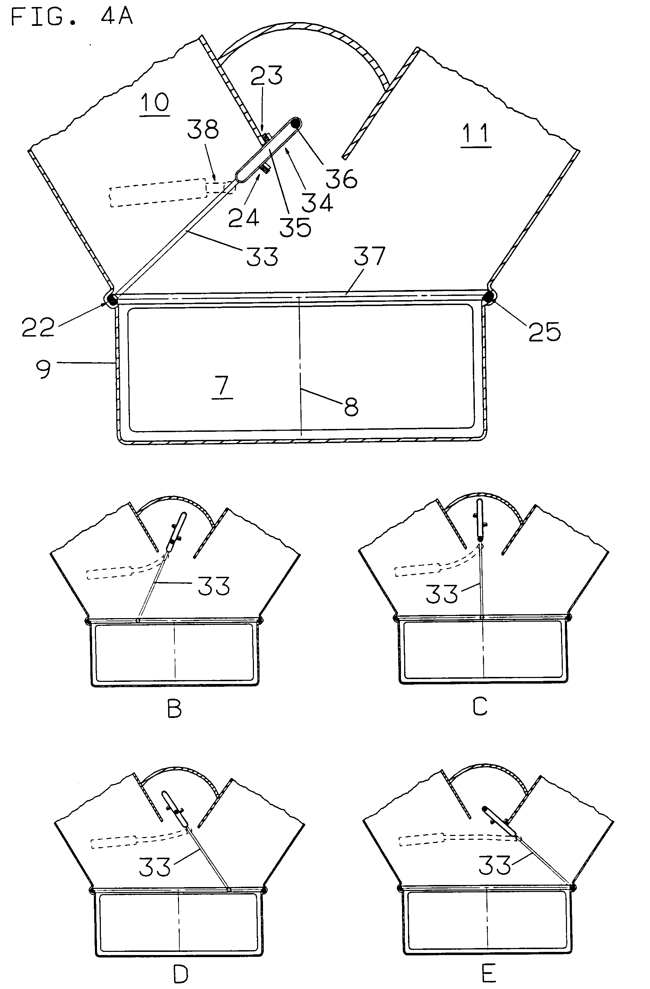

Im Ausführungsbeispiel nach Figur 4 ist wiederum eine Frischluft-Umluft-Klappe 33 über eine gebläseferne Kulissenführung 34 geführt, wobei eine Kulissenbahn 35 Bestandteil der Klappe 33 ist. Die Klappe ist an einem gehäusefesten Zapfen 36 verschwenk- und verschiebbar "schwimmend" gelagert. Eine zweite Kulissenbahn 37 verläuft parallel zu der Außenkontur des Gebläses 7 im Gehäuse 9 über die gesamte Breite (Durchmesser) des Gebläses. In dieser Kulissenbahn 37 ist das gebläsenahe Ende der Klappe 33 gleitgelagert, so daß die Klappe 33 in der Kulissenbahn 37 verschwenk- und verschiebbar ist. Zapfen der Klappe 33 können beispielsweise in als Nut ausgebildeten Kulissenbahnen 37 gelagert sein. Werden Kräfte über ein Verstellelement 38 einer Verstellvorrichtung auf die Klappe 33 ausgeübt, kann sich die Klappe 33 in vorbestimmter Weise sehr dicht am Gebläse 7 entlangbewegen. Das Verstellelement 38 ist beispielsweise als Bowdenzug ausgebildet.

Durch die erfindungsgemäße Klappenausbildung sind die Luftansaugkanäle 10, 11 besonders strömungsgünstig anzuordnen. Sie können im direkten Gebläsebereich enden, ohne daß sich Abrißkanten negativ auswirken. Die Klappen 12, 26, 33 sind gut zu den Kanälen 10, 11 hin abdichtbar und verweilen sicher in ihrer Schließstellung. Je nach gewünschtem Komfort sind unterschiedliche Verstellvorrichtungen anwendbar, so daß mit geringem Aufwand sowohl eine rein mechanische als auch eine automatisierte Verstellung realisierbar ist.

## Patentansprüche

1. Heizungs- und Belüftungs- bzw. Klimaanlage für Kraftfahrzeuge mit einer Frischluft-Umluft-Klappe (12; 26; 33) zum wahlweisen Öffnen und Verschließen von Luftansaugkanälen (10, 11), durch die entweder Frischluft oder Umluft von einem Gebläse (7) ansaugbar ist, wobei die Luftansaugkanäle (10, 11) nahe einer Ansaugöffnung des Gebläses (7) in einem Gehäuse (9) enden, **dadurch gekennzeichnet**, daß die Klappe (12; 26; 33) einteilig ausgeführt, in zumindest einer Kulissenführung (13, 14; 34) verschwenk- und verschiebbar im Gehäuse (9) gelagert ist und beim Verstellen eine kombinierte rotatorische und translatorische Bewegung ausführt, wobei ein. Ende der Klappe (12; 26; 33) sich ständig sehr nahe am Gebläse (7) entlang bewegt.

2. Heizungs- und Belüftungs- bzw. Klimaanlage nach Anspruch 1, **dadurch gekennzeichnet**, daß die Kulissenführung (13; 14; 34) derart ausgebildet ist, daß sich das Ende der Klappe (12; 26; 33) auf einer annähernd linearen Bahn (21; 32) bewegt.

3. Heizungs- und Belüftungs- bzw. Klimaanlage nach Anspruch 1 und 2, **gekennzeichnet durch** eine Kulissenführung (13; 34) mit zumindest einer Kulissenbahn (15; 30; 35) als Bestandteil der Klappe (12; 26; 33), wobei die Kulissenbahn (15; 30; 35) annähernd in einer Klappenebene linear verläuft und die Klappe (12; 26; 33) an zumindest einem in der Kulissenbahn (15; 30; 35) geführten Zapfen (16; 31; 36) des Gehäuses (9) gelagert ist.

4. Heizungs- und Belüftungs- bzw. Klimaanlage nach den Ansprüchen 1 bis 3, **gekennzeichnet durch** eine zweite Kulissenführung für die Klappe (33), die aus zumindest einer gebläsenahen, annähernd linear und parallel zur Gebläsekontur verlaufenden Kulissenbahn (37) besteht, in der ein Zapfen der Klappe (33) verschwenk- und verschiebbar gelagert ist.

5. Heizungs- und Belüftungs- bzw. Klimaanlage nach den Ansprüchen 1 bis 3, **gekennzeichnet durch** eine zweite Kulissenführung (14) für die Klappe (12), die aus zumindest einer gebläsefernen Kulissenbahn (18) im Gehäuse (9) besteht, welche annähernd die Form eines Kreisringsektors aufweist und in der ein Zapfen (17) der Klappe (12) verschwenk- und verschiebbar gelagert ist.

6. Heizungs- und Belüftungs- bzw. Klimaanlage nach zumindest einem der Ansprüche 1 bis 5, **dadurch gekennzeichnet**, daß ein rotatorisch um eine Achse (19) bewegliches Verstellelement (20; 27) einer Verstellvorrichtung im Abstand zu der Achse (19) gelenkig mit der Klappe (12; 26) verbunden ist.

7. Heizungs- und Belüftungs- bzw. Klimaanlage nach zumindest einem der Ansprüche 1 bis 5, **dadurch gekennzeichnet**, daß ein Verstellelement (38) einer Verstellvorrichtung im Abstand zu einer Schwenkachse der Klappe (33) an der Klappe (33) gehaltert ist und die Klappe (33) über das Verstellelement (38) mit Kräften beaufschlagbar ist, wodurch die Klappe(33) in ihre Sollposition gezogen/gedrückt wird.

8. Heizungs- und Belüftungs- bzw. Klimaanlage nach den Ansprüchen 1 bis 7, **dadurch gekennzeichnet**, daß die Kulissenführung (13; 14) derart ausgebildet ist, daß die Klappe (12; 26) kurz vor dem Verschließen eines der Luftansaugkanäle (10, 11) eine annähernd lineare Bewegung in Richtung einer Klappenebene ausführt.

## Claims

1. Heating and ventilation or air conditioning system for motor vehicles with a fresh air/circulating air flap (12; 26; 33) for selectively opening and closing air intake ducts (10, 11) through which either fresh air or circulating air can be drawn in by a fan (7), wherein the air intake ducts (10, 11) end near an intake opening of the fan (7) in a housing (9), characterised in that the flap (12; 26; 33) is constructed in one part, is mounted in the housing (9) so as to be pivotable and slidable in at least one connecting link guide (13, 14; 34) and on displacement performs a combined rotational and translational movement, wherein one end of the flap (12; 26; 33) moves constantly very close along the fan (7).

2. Heating and ventilation or air conditioning system according to claim 1, characterised in that the connecting link guide (13; 14; 34) is constructed in such a way that the end of the flap (12; 26; 33) moves in an approximately linear path (21; 32).

3. Heating and ventilation or air conditioning system according to claims 1 and 2, characterised by a connecting link guide (13; 34) with at least one connecting link track (15; 30; 35) as part of the flap (12; 26; 33), wherein the connecting link track (15; 30; 35) extends linearly approximately in a flap plane and the flap (12; 26; 33) is mounted on at least one pin (16; 31; 36) of the housing (9) guided in the connecting link track (15; 30; 35).

4. Heating and ventilation or air conditioning system according to claims 1 to 3, characterised by a second connecting link guide for the flap (33) which consists of at least one connecting link track (37) which is close to the fan and extends approximately linearly and parallel to the fan contour and in which a pin of the flap (33) is mounted pivotably and slidably.

5. Heating and ventilation or air conditioning system according to claims 1 to 3, characterized by a second connecting link guide (14) for the flap (12) which consists of at least one connecting link track (18) in the housing (9) which is remote from the fan and has approximately the shape of a circular ring sector and in which a pin (17) of the flap (12) is mounted pivotably and slidably.

6. Heating and, ventilation or air conditioning system according to one or more of claims 1 to 5, characterized in that a displacement element (20; 27) of a displacement device which is rotationally movable about an axis (19) is pivotably connected to the flap (12; 26) at a distance from the axis (19).

7. Heating and ventilation or air conditioning system according to one or more of claims 1 to 5, characterized in that a displacement element (38) of a displacement device is mounted on the flap (33) at a distance from a pivot axis of the flap (33), and the flap (33) by means of the displacement element (38) can be subjected to forces as a result of which the flap (33) is pulled/pushed into its nominal position.

8. Heating and ventilation or air conditioning system according to claims 1 to 7, characterised in that the connecting link guide (13; 14) is constructed in such a way that, shortly before closing one of the air intake ducts (10, 11), the flap (12; 26) performs an approximately linear movement in the direction of a flap plane.

## Revendications

1. Dispositif de chauffage et d'aération ou de climatisation pour véhicules comportant un volet de commutation air frais-air recyclé (12; 26; 33) pour ouvrir et fermer de manière sélective des canaux d'admission d'air (10,11) à travers lesquels soit de l'air frais, soit de l'air recyclé peut être aspiré par un ventilateur (7), les canaux d'admission d'air (10, 11) se terminant dans le voisinage d'une ouverture d'aspiration du ventilateur (7) dans un boîtier (9), caractérisé par le fait que le volet (12; 26; 33) est réalisé d'une seule pièce, est monté pivotant et coulissant dans au moins un guide de coulisse (13, 14; 34) et, lors du réglage, exécute un mouvement combiné de rotation et de translation, une extrémité du volet (12; 26; 33) se déplaçant constamment très près le long du ventilateur (7).

2. Dispositif de chauffage et d'aération ou de climatisation selon la revendication 1, caractérisé par le fait que le guide de coulisse (13; 14; 34) est agencé de telle sorte que l'extrémité du volet (12; 26; 33) se déplace suivant une trajectoire (21;32) sensiblement linéaire.

3. Dispositif de chauffage et d'aération ou de climatisation selon les revendications 1 et 2, caractérisé par un guide de coulisse (13; 44) avec au moins une glissière de coulisse (15; 30; 35) qui fait partie intégrante du volet (12; 26; 33), la glissière de coulisse (15; 30; 35) s'étendant sensiblement linéairement dans un plan de volet et le volet (12; 26; 33) étant monté sur au moins un axe (16; 31; 36) du boîtier (9) guidé dans la glissière de coulisse (15; 30; 35).

4. Dispositif de chauffage et d'aération ou de climatisation selon les revendications 1 à 3, caractérisé par un deuxième guide de coulisse pour le volet (33) qui se compose d'au moins une glissière de coulisse (37) voisine du ventilateur, sensiblement linéaire et parallèle au contour du ventilateur, dans laquelle un axe du volet (33) est monté avec possibilité de coulissement et de pivotement.

5. Dispositif de chauffage et d'aération ou de climatisation selon les revendications 1 à 3, caractérisé par un deuxième guide de coulisse (14) pour le volet (12) qui se compose d'au moins une glissière de coulisse (18) éloignée du ventilateur dans le boîtier (9), qui a sensiblement la forme d'un secteur d'anneau circulaire et dans laquelle un axe (17) du volet (12) est monté avec possibilité de coulissement et de pivotement.

6. Dispositif de chauffage et d'aération ou de climatisation selon au moins une des revendications 1 à 5, caractérisé par qu'un élément de réglage (20, 27) d'un dispositif de réglage, mobile en rotation autour d'un axe (19), est lié de manière articulée au volet (12; 26) à distance de l'axe (19).

7. Dispositif de chauffage et d'aération ou de climatisation selon au moins une des revendications 1 à 5, caractérisé par qu'un élément de réglage (38) d'un dispositif de réglage est fixé au volet (33) à distance d'un axe de pivotement du volet (33) et que le volet peut être soumis à des forces par l'intermédiaire de l'élément de réglage (38), le volet (33) étant ainsi tiré / repoussé dans sa position de consigne.

8. Dispositif de chauffage et d'aération ou de climatisation selon les revendications 1 à 7, caractérisé par que le guide de coulisse (13; 14) est agencé de telle sorte que le volet (12; 26), peu avant de fermer l'un des canaux d'admission d'air (10, 11), exécute un mouvement sensiblement linéaire dans la direction d'un plan de volet.
